# EUROPEAN PATENT APPLICATION

(11) **EP 1 189 367 A1**
(43) Date of publication of application: **20.03.2002**
(21) Application number: 00402147.3
(22) Date of filing: 27.07.2000
(51) Int. Cl.: H04B 10/08, H04J 14/02, G01M 11/00

(54) **System and method for determining wavelength dependent information in an optical communication system**

(71) Applicant: ALCATEL, 75008 Paris (FR)
(72) Inventor: Gautheron, Olivier, 78180 Montigny le Bretonneux (FR); Chesnoy, José, 75014 Paris (FR)
(74) Representative: Lamoureux, Bernard

(57) **Abstract**

The invention relates to a system and method for determining wavelength dependent information in optical signal transmission systems. According to the invention after a plurality of optical signals at different wavelengths are launched into the transmission system, backscattered and/or reflected signal portions are received for each wavelength, and subsequently processed to determine wavelength dependent information about the transmission system. With the present invention the gain evolution along the transmission link can be measured, after the transmission system is installed. In particular this is advantegous for submarine optical signal transmission systems.

## Description

### Field of the invention

The invention relates generally to the field of optical communication technology. More particularly the invention relates to a system and method for wavelength dependent measurement in optical signal transmission systems.

### Background of the invention

In recent years, optically amplified transmission systems have been developed, in which digital data are transmitted by performing optical amplification and optical relay or repeat using optical transmission fiber. Such systems are e.g. used for signal transmission in submarine networks.

The gain flatness of optical repeaters used in such transmission systems can be measured in detail during repeater testing in the factory and during repeater assembly as well as during assembly of the overall system.

In case of submarine applications, only the gain of the overall link can be measured by means of conventional transmission measurement once the transmission system is installed under water. By using this conventional technique the evolution of the gain along the link cannot be obtained. Therefore a major problem is to measure the gain flatness of e.g. a block of repeaters after laying of such submarine system, without having access to the isolated blocks in transmission.

Whilst there is no known method of measuring the gain flatness of blocks of repeaters of submarine systems once they are in the water, the gain flatness information can be important for the measurement of system ageing, or may be used to adapt adjustable gain flattening devices on the line. Apart from submarine systems, a similar problem may occur in every case where the access to the blocks of repeaters in transmission is difficult or impossible.

### Object of the invention

An object of the invention is to provide a system and method for determining wavelength dependent information in optical signal transmission systems.

### Summary of the invention

According to a first aspect of the invention there is provided a method for determining wavelength dependent information in an optical signal transmission system wherein a plurality of optical signals at different wavelengths are launched into the transmission system, and a backscattered and/or reflected portion of the launched optical signal versus time is received from the transmission system for each wavelength, and wherein the received data is processed to determine wavelength dependent information about the transmission system.

According to another aspect of the invention there is provided a system for carrying out this method.

The main advantage of the present invention is, that the gain evolution along the link can be measured, after the transmission system is installed. That means it is possible to measure the gain flatness of a block of repeaters after laying the system, without having access to the isolated blocks in transmission, that is without the need to remove the block of repeaters from the transmission system. In particular this is advantegous for submarine optical signal transmission systems.

By testing the optical transmission system with a system according to the present invention the measurement of system ageing and other test methods can be improved.

### Brief description of the drawings

The invention will be described in detail in the following description of preferred embodiments with reference to the following figures wherein:
- FIG. 1: shows a schematic structure of a known optical transmission system with COTDR,
- FIG.2: shows a typical COTDR trace,
- FIG.3: shows a schematic structure of a COTDR according to an embodiment of the present invention,
- FIG.4: shows COTDR traces for different wavelengths resulting from a measurement according to an embodiment of the present invention.

### Description of preferred embodiments

An optical transmission system according to the present invention can be any optical network, e.g. a submarine network etc.

The present invention suggests to obtain the gain response of an optical transmission link (or a part of the link, e.g. a block of repeaters) by measuring the gain flatness, i.e. the amplifier gain at different wavelengths. For this purpose it is further suggested to adapt a known measurement technique in order to minimize the need for adding further equipment. There are many known surveillance and test methods for optical transmission systems. One of these methods, the Optical Time Domain Reflectometry (OTDR) technique, is used to locate system fiber breaks or degradation of the loss in the fiber. If the transmission system employs optical amplifiers, as it is the case e.g. in optical repeaters which are employed in long haul transmission systems, conventional Optical Time Domain Reflectometry (OTDR) can not be used because of the noise provided by the optical amplifiers. For this reason coherent OTDR (COTDR) is used for amplified transmission systems. COTDR is an improved OTDR employing a coherent detection scheme, which allows to drastically reduce the optical amplifier noise.

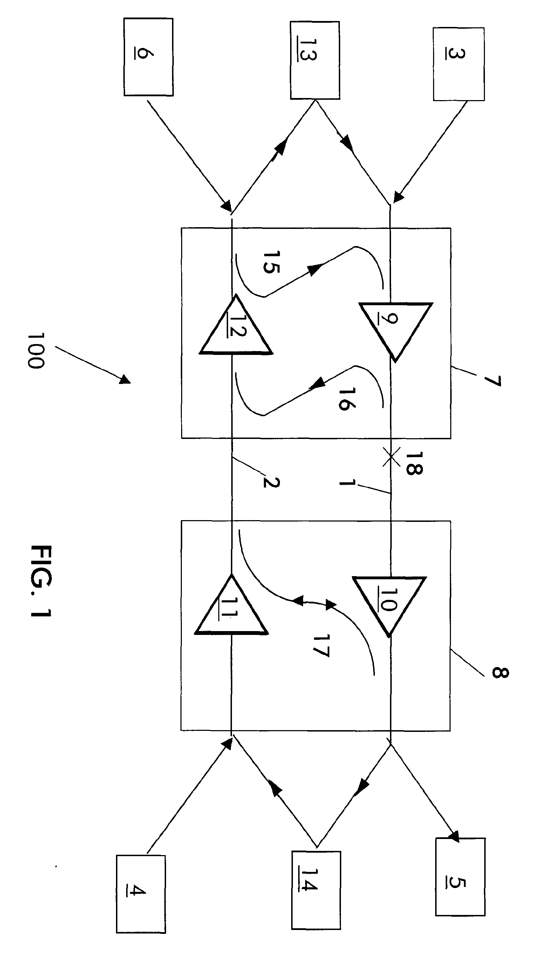

The function of a conventional COTDR system is described below. For this purpose FIG.1 shows a schematic view illustrating the structure of a bidirectional optical transmission system 100.

At a first end of the transmission system 100 there is provided a first transmitter 3 coupled to an outbound fiber for transmitting signals in a first transmission direction 1 and a first receiver 6 coupled to an inbound fiber for receiving signals from the other transmission direction 2. At a second end of the transmission system 100 there is provided a second transmitter 4 coupled to an outbound fiber for transmitting signals in the other transmission direction 2 and a second receiver 5 coupled to an inbound fiber for receiving signals in the first transmission direction 1.

The system comprises optical repeaters 7, 8, each of which comprises optical amplifier 9, 10, e.g. erbium doped fiber amplifiers (EDFAs) for amplifying transmission signals in the first transmission direction 1, and optical amplifier 11, 12 for amplifying transmission signals in the second transmission direction 2. Optical amplifiers 9, 10, 11, 12 include optical isolators (not shown), which control the signal propagation direction by stopping any backscattered optical signal.

The transmitting system 100 further comprises COTDR systems 13, 14 at both ends. Both COTDR systems 13, 14 are coupled to both inbound and outbound in order to transmit and receive test signals. For measuring the fiber attenuation profile along the link, the COTDR 13 launches a pulsed laser test signal at a fixed wavelength into the optical network under test. Whilst the test signal is propagating through the optical fiber, the light is scattered in all direction, including back towards the test signal source. For resending backscattered or reflected light, which might also come from a fiber break or another damage on the optical path, to the transmit end, optical loop backs are used. Such optical loop backs 15, 16, 17 are implemented in the optical repeaters 7, 8. Thereby different loop back configuations might be used, e.g. a first configuration as implemented in repeater 7, which utilizes typical COTDR loop back means 15, 16, or a second configuration as implemented in repeater 8, which utilizes a direct loop back 17. In case of e.g. a fiber break 18 in the outbound line 1, the test signal from COTDR 13 is reflected or backscattered from the break 18 and transmitted via loop back 16 and amplifier 12 back to COTDR 13. For implementing the optical loop back, optical directional coupler might be used in order to transfer the backscattered or reflected light from the outbound line to the inbound line.

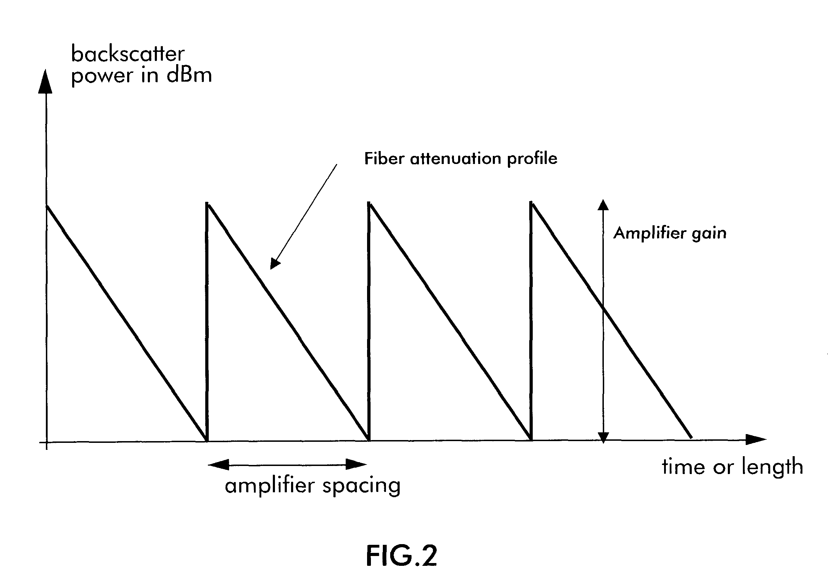

The COTDR measures the backscattered or reflected optical signal versus time, where the time correlates with the distance from the COTDR, i.e. an actual location in the fiber. As a result the COTDR gives a graphic display (trace) of the status of the link being tested. Atypical COTDR trace is given in FIG.2. Therein the backscatter power on a logarithmic scale versus the distance from the COTDR is shown. A typical amplifier spacing is e.g. 100 km. The COTDR trace reveals the exact attenuation profile of the fiber, which might be used e.g. for default localization. For that measurement, there is no need to have specific COTDR wavelengths since the fibre default (loss, break, ...) are wavelengths independant.

To obtain the gain response of the optical transmission link (or a part of the link) as suggested by the invention, it is necessary to measure the gain flatness, i.e. the amplifier gain at different wavelengths. From a COTDR trace as shown in FIG.2 not only the exact attenuation profile of the fiber, but other information delivered by the COTDR, but unused up to now, can be obtained. Such other information is the exact amplifier gain at the COTDR wavelength. However, from a conventional COTDR trace only the gain of the amplifiers at one wavelength, that is the wavelength of the COTDR, can be obtained. The amplifier gain for all other wavelengths remains unknown.

According to a preferred embodiment of the invention it is proposed to extend a known COTDR measurement technique as described above to determine the gain flattening of the line by wavelength resolution of the COTDR measurement. To achieve this the COTDR is adapted to other wavelengths in order to obtain the COTDR traces for other wavelengths. By evaluating all COTDR traces obtained, it is possible to obtain the gain of each amplifier 9, 10, 11, 12 for each COTDR wavelength. Therewith the gain flatness of optical devices, such as the gain flatness of a block of optical repeaters in optical signal transmission systems can be determined. Accordingly the gain response of the optical transmission link (or a part of the link) versus wavelength can be obtained. The relative gain difference between different wavelengths can be used to characterize the optical transmission system.

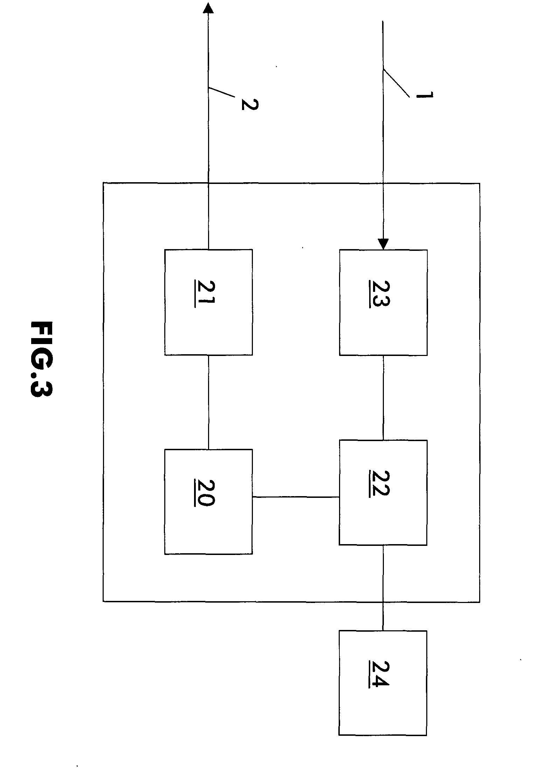

FIG.3 gives a schematic view of a COTDR system 19, which is adapted according to an embodiment of the present invention. The COTDR system 19 is to replace conventional COTDR systems, e.g. COTDR 13 or 14, in order to implement the present invention in the transmission system 100 shown in FIG.1. To extend the functionality of known COTDR systems to obtain a gain profile versus wavelength measurement, it is necessary to launch a COTDR signal with a tunable wavelength λₙ (n = 1...i) that covers the overall used wavelength range. The wavelengths λₙ and the number of wavelengths i are chosen depending on the purpose of the measurement. In a standard Wavelength division multiplexing (WDM) system, the spacing between the transmitted modulated wavelengths is typically 0.4 nm and the total number of wavelengths can reach e.g. a number of 100. In such a system, the COTDR should preferably scan over the multiplex range with a resolution of at least 0.4 nm. Depending on the purpose of the measurement these parameters have to be altered in order to get a sufficient resolution.

For providing a wavelength dependent measurement a COTDR (e.g. the COTDR 19) is adapted such, that it comprises a COTDR pulse generator 20 and a variable wavelength light pulse source 21. Thereby the pulse generator 20 drives the light pulse source 21 to generate laser light pulses of different specific wavelengths. Of course, instead of one variable wavelength light pulse source, several light pulse sources, each generating a fixed wavelength light pulse, might be utilized. The light pulses generated by the light pulse source are launched into the transmission system by appropriate means not shown in FIG.3. In addition to the COTDR test signal in a preferred embodiment of the present invention a number of transmission signals at fixed wavelengths spread over the used spectral range are also launched by transmitter 3, 4 to make the optical amplifiers 9, 10, 11, 12 working in their nominal conditions. The COTDR system 19 further comprises a processing device 22, which controls the launching of the test signals at different wavelengths by the light source 21 by controlling the pulse generator 20.

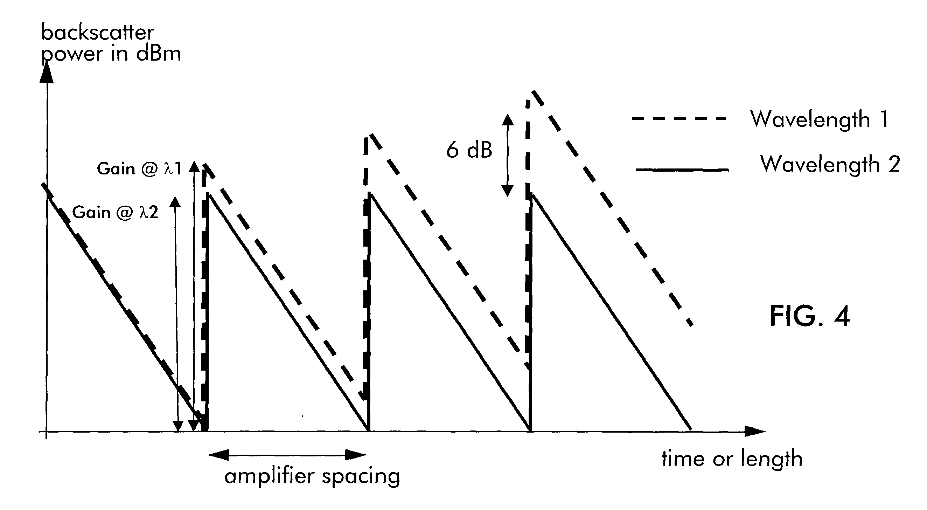

The COTDR system 19 further comprises a COTDR receiver 23 for receiving the backscattered and/or reflected light from the inbound 2. After converting the received optical signals into electrical signals the receiver 23 sends these data for all launched test signals and for each wavelength to the processing device 22, where they are recorded. FIG.4 shows two COTDR traces for different wavelengths λ₁ and λ₂ resulting from a measurement according to an embodiment of the present invention. In this example at wavelength λ₁ the gain of each amplifier 11, 12 is 2 dB higher than at wavelength λ₂. The span loss is exactly equal to the amplifier gain at wavelength λ₂.

Processing device 22 collects these data and compares the COTDR traces to obtain a relative gain profile versus wavelength along the link. Using this wavelength resolution the surveillance of the gain of the remote optical amplifiers along the link in the optical transmission system 100 will be possible. Further wavelength dependent information about the tested transmission system may be obtained from the collected COTDR traces, if the traces are further computed according to methods and algorithms as known in the art. The resulting information from the processing device 22, e.g. gain profile versus wavelength plots can be displayed by means of a display device 24, which can be a monitor or printer device or the like.

The required equipment for carrying out the present invention is already installed in most of todays transmission systems. Therefore the present invention can easily applied to existing transmission systems by simlpy employ a COTDR system as described in the present invention, or by adapting the existing surveillance or test system accordingly.

With the method and system according to the present invention the gain evolution für all optical devices in the transmission link, i.e. the gain evolution along the link can be measured. Although in the above embodiment a optical transmission system with COTDRs at both ends is discussed, the present invention can as well be implemented in a transmission system with one COTDR system only. Furthermore it is not necessary for implementing the present invention to have a bidirectional transmission system. The present invention is applicable to unidirectional transmission systems also.

Besides measuring the gain evolution along the link, any other wavelength dependent information about the transmission system under test can be obtained by using the basic principles of the present invention.

## Claims

1. Method for determining wavelength dependent information in an optical signal transmission system (100), **characterized in that** the method comprises the steps of:
- launching a plurality of optical signals at different wavelengths into the transmission system (100),
- for each wavelength receiving a backscattered and/or reflected portion of the launched optical signal versus time from the transmission system (100), and
- processing the received data to determine wavelength dependent information about the transmission system (100).

2. The method of claim 1, **characterized in that** the processing step comprises:
- determining wavelength dependent information for each optical device along a link (1, 2) of the transmission system (100).

3. The method of claim 1, **characterized in that** the processing step comprises:
- determining a relative gain profile versus wavelength for each amplifier (9, 10, 11, 12) along a link (1, 2) of the transmission system (100).

4. The method of claim 1, **characterized in that** it comprises the further step of:
- displaying the wavelength dependent information.

5. System for determining wavelength dependent information in an optical signal transmission system (100), **characterized in that** the system (19) comprises:
- means for launching a plurality of optical signals at different wavelengths into the transmission system (100),
- means (23) for receiving a backscattered and/or reflected portion of the launched optical signal versus time from the transmission system (100) for each launched wavelength, and
- means (22) for processing the received data to determine wavelength dependent information about the transmission system (100).

6. The system of claim 5, **characterized in that** the launching means comprises a pulse generator (20) and a variable wavelength light pulse source (21).

7. The system of claim 5, **characterized in that** the processing means (22) are adapted for determining wavelength dependent information for each optical device along a link (1, 2) of the transmission system (100).

8. The system of claim 5, **characterized in that** the processing means (22) are adapted for determining a relative gain profile versus wavelength for each amplifier (9, 10, 11, 12) along a link (1, 2) of the transmission system (100).

9. The system of claim 5, **characterized in that** it further comprises:
- means for displaying the wavelength dependent information.

10. Optical signal transmission system **characterized in that** it comprises a system according to claim 5.
